# EUROPÄISCHE PATENTSCHRIFT

(11) **EP 2 676 174 B1**
(45) Veröffentlichungstag und Bekanntmachung des Hinweises auf die Patenterteilung: **12.04.2017**
(21) Anmeldenummer: 12712920.3
(22) Anmeldetag: 09.02.2012
(51) Int. Cl.: G05B 19/19, G05B 19/404, G05B 13/02

(54) **VERFAHREN UND VORRICHTUNG ZUR REGELUNG EINES ANTRIEBS FÜR EIN WERKZEUG ODER WERKSTÜCK**
METHOD AND DEVICE FOR ADJUSTING A DRIVE FOR A TOOL OR WORKPIECE
PROCÉDÉ ET DISPOSITIF DE RÉGULATION DE L'ENTRAÎNEMENT POUR UN OUTIL OU UNE PIÈCE

(30) Priorität: 14.02.2011 EP 11001166
(43) Veröffentlichungstag der Anmeldung: 25.12.2013
(73) Patentinhaber: Schneider GmbH & Co. KG, 35112 Fronhausen (DE)
(72) Erfinder: SCHNEIDER, Gunter, 35037 Marburg (DE); KLEIN, Christoph, 35236 Breidenbach-Niederdieten (DE)
(74) Vertreter: Von Rohr Patentanwälte Partnerschaft mbB
(86) Internationale Anmeldenummer: PCT/EP2012/000585
(87) Internationale Veröffentlichungsnummer: WO 2012/110214

(56) Entgegenhaltungen:
- EP-A1- 1 439 437
- EP-A1- 1 560 325
- EP-A1- 1 818 744
- WO-A1-2008/034453
- DE-A1- 19 637 632

## Beschreibung

Die vorliegende Erfindung betrifft ein Verfahren zur Regelung eines Antriebs für ein Werkzeug oder Werkstück gemäß dem Oberbegriff des Anspruchs 1 und eine Vorrichtung mit einer Regeleinrichtung gemäß dem Oberbegriff des Anspruchs 18.

Eine schnelle und effiziente Bearbeitung eines Werkstücks mit einem Werkzeug erfordert eine entsprechend schnelle und exakte Werkzeugbewegung. In der industriellen Fertigung kommen regelmäßig sogenannte computerunterstützte numerische Steuerungen oder "Computerized Numerical Controls" (CNC) zum Einsatz, wobei für eine exakte Positionierung von Werkzeugen Regelungen der entsprechenden Antriebe vorgesehen sind.

Zügiges Erreichen einer Zielposition ist eine Voraussetzung für eine schnelle und effiziente Bearbeitung. Hieraus resultierende Änderungsgeschwindigkeiten des Sollwerts können jedoch zu einem so genannten Schleppfehler führten. Der Schleppfehler ist eine Kenngröße für die Regelabweichung, wobei sich bei einem rampenförmigen Verlauf des Sollwerts ein stationärer Wert für den Schleppfehler einstellt. Der Schleppfehler kann reduziert werden, indem eine Regelung mit hohem Verstärkungsfaktor bzw. Geschwindigkeitsverstärkungsfaktor eingesetzt wird, wobei jedoch die Gefahr des Auftretens von Instabilitäten erhöht wird.

Insbesondere bei Verfahren, die unter dem Begriff "Hochgeschwindigkeitszerspanung" oder "High Speed Cutting", nachfolgend auch HSC genannt, zusammengefasst werden, wird mit sehr hohen Änderungsgeschwindigkeiten der Führungsgröße oder eines hierzu korrespondierenden Werts, insbesondere des Positionssollwerts, sehr hohen Vorschubgeschwindigkeiten, sehr hohen Schneid- bzw. Bearbeitungsgeschwindigkeiten und/oder sehr hohen Beschleunigungen gearbeitet. Zur Reduktion des Schleppfehlers ist es bekannt, eine Vorsteuerung zu verwenden, die aus einer Führungsgröße, also insbesondere einem Positionssollwert, eine zu regelnde Stellgröße, also beispielsweise einen Strom eines Antriebs, bereits grob vorsteuert, damit die Regelung lediglich verhältnismäßig kleine Differenzen kompensieren muss. Der Einsatz einer solchen Vorsteuerung kann zu einer Reduktion des Schleppfehlers führen.

Die DE 196 37 632 A1 betrifft ein Verfahren zur Regelung einer Vorschubeinheit einer Werkzeugmaschine, wobei zur Kompensation von Reibungseinflüssen und eines hierdurch induzierten Schleppfehlers ein Vorsteuerwert ermittelt wird. Dieser wird zur Vorsteuerung einer Stellgröße der Regelung hinzugefügt. Es wird eine Reglerkaskade verwendet, wobei die dieser Kaskade zugeführten Sollwerte zur Bestimmung des Vorsteuerwerts verwendet werden.

Die DE 10 2006 006 162 A1 betrifft eine Reglerstruktur zur Lageregelung, wobei aus einem Lagesollwert ein Vorsteuerstrom für einen Antrieb bestimmt wird. Dieser Vorsteuerstrom wird differenziert und mit einem Faktor multipliziert. Durch diesen Faktor soll es möglich sein, die Vorsteuerung an unterschiedliche Anwendungen anzupassen.

Die EP 1 439 437 A1 betrifft ein Verfahren zur aktiven Dämpfung niederfrequenter Schwingungen an numerisch gesteuerten Werkzeugmaschinen. An einer Multiplikationsstelle wird die Differenz aus der abgeleiteten Drehzahl und der Solldrehzahl mit einem Faktor multipliziert, was erlauben soll, eine aktive Dämpfung der niederfrequenten Schwingungen stufenlos zu regulieren. Es ist jedoch nicht offenbart, wie ein solcher Verstärkungsfaktor bestimmt werden könnte.

Die EP 1 560 325 A1 betrifft eine Vorrichtung zur Kontrolle einer Motorposition, wobei ein Vorschub-Tiefpassfilter mit einer Übertragungsfunktion zur Elimination von Rippeln durch Quantisierungsfehler eingesetzt wird. Insbesondere kann eine abgeleitete Positionsanweisung verstärkt und durch das Tiefpassfilter zur Elimination der Rippel gefiltert werden. Bezüglich des Verstärkungsfaktors ist offenbart, dass dieser zwischen 40 und 50 % liegen kann, aber auch in der Nähe von 100 %. Fraglich ist jedoch, ob und ggf. wie ein solcher Faktor bestimmt werden könnte.

Der vorliegenden Erfindung liegt die Aufgabe zugrunde, ein Verfahren zur Regelung eines Antriebs für ein Werkzeug oder Werkstück oder eine Vorrichtung anzugeben, wobei Schleppfehler effektiver verringert oder vermieden werden können.

Die obige Aufgabe wird durch ein Verfahren gemäß Anspruch 1 oder durch eine Vorrichtung gemäß Anspruch 9 gelöst. Vorteilhafte Weiterbildungen sind Gegenstand der Unteransprüche.

Das vorschlagsgemäße Verfahren betrifft die Regelung eines Antriebs für ein Werkzeug oder Werkstück, insbesondere zum Herstellen oder Bearbeiten einer optischen Linse, wobei eine Vorsteuerung erfolgt, insbesondere zur Reduktion eines Schleppfehlers. Vorschlagsgemäß erfolgt die Vorsteuerung in Abhängigkeit von einer zu einer Führungsgröße korrespondierenden Bewegungsfrequenz. Hierbei kann eine Frequenz der Führungsgröße oder eines hierzu korrespondierenden Verlaufs als Bewegungsfirequenz bestimmt oder berechnet werden. In Abhängigkeit von der Bewegungsfrequenz kann mindestens ein Vorsteuerfaktor bestimmt und dieser Vorsteuerfaktor zur Vorsteuerung verwendet werden.

Es ist besonders bevorzugt, dass ein oder mehrere Vorsteuerfaktoren und/oder ein Verlauf eines oder mehrerer Vorsteuerfaktoren vor Beginn der Bearbeitung des Werkstücks insbesondere vollständig ermittelt und/oder abgespeichert wird bzw. werden, vorzugsweise ein Vorsteuerfaktor bzw. Verlauf des Vorsteuerfaktors in Abhängigkeit der Bearbeitungsfrequenz oder einer hierzu korrespondierenden Größe.

Der Vorsteuerfaktor kann insbesondere in Abhängigkeit von der Bewegungsfreuqenz oder der hierzu korrespondierenden Größe nachgeführt werden. Die zu der Bearbeitungsfrequenz korrespondierende Größe ist insbesondere ein Bearbeitungsparameter, ein Bearbeifiungsbereich, eine Bearbeitungszeit, ein Bearbeitungsfortschritt, ein Bearbeitungsort, eine Bearbeitungsgeschwindigkeit, eine Drehzahl und/oder Position des Werkzeugs, des Werkstücks, des Werkzeugs und des Werkstücks relativ zueinander oder eine beliebige Kombination möglicher zu der Bearbeitungsfrequenz korrespondierenden Größen, insbesondere eine Kombination aus Bearbeitungsgeschwindigkeit bzw. Drehzahl und der Position von Werkzeug und Werkstück zueinander.

Insbesondere kann ein Vorsteuerfaktor in Abhängigkeit von der Bearbeitungsfrequenz bestimmt und dieser Vorsteuerfaktor über die Bearbeitungsfreuqenz der zu der Bearbeitungsfreuqenz korrespondierenden Größe zugeordnet sein. Hierdurch kann der zu der Bearbeitungsfrequenz korrespondierenden Größe ein Vorsteuerfaktor oder Verlauf des Vorsteuerfaktors unmittelbar zugeordnet werden, insbesondere vollständig vor Beginn der Bearbeitung.

Beispielsweise kann einer Position, Drehzahl und/oder einem sonstigen Bearbeitungsparameter über die Bearbeitungsfrequenz ein Vorsteuerfaktor oder Verlauf hiervon unmittelbar zugeordnet sein bzw. vor Beginn der Bearbeitung zugeordnet werden. Eine Wahl und/oder Nachführung des Vorsteuerfaktors kann dann bei der Bearbeitung basierend auf der Position, Drehzahl und/oder dem sonstigen Bearbeitungsparameter erfolgen. Daher ist es nicht notwendig, während der Bearbeitung des Werkstücks die Bearbeitungsfrequenz zu bestimmen oder zu berechnen. So kann der Rechenaufwand zur Analyse der Bearbeitungsfrequenz vorverlagert werden, wodurch Verzögerungen in der Bearbeitung oder der Nachführung des Vorsteuerfaktors während der Bearbeitung vermieden werden können.

Bevorzugt wird eine zu der Führungsgröße korrespondierende Bewegungsfrequenz bestimmt und die Vorsteuerung erfolgt in Abhängigkeit von der Bewegungsfrequenz. Alternativ oder zusätzlich kann die Bewegungsfrequenz in der Vorsteuerung durch ein Filter berücksichtigt werden.

Der Einsatz einer Vorsteuerung zur Beschleunigung einer Regelung ist bereits bekannt. Vorsteuerungen verwenden hierbei üblicher Weise die Ableitung einer Führungsgröße, die zu einer Stellgröße einer Regelung addiert wird. Nicht beachtet wurde jedoch bisher, dass der zeitliche Verlauf der Führungsgröße unterschiedliche Frequenzen bzw. spektrale Anteile aufweisen kann.

Beispielsweise erfolgt beim Drehen eines zu der Rotationsachse nichtsymmetrischen Werkstücks eine zu der Umdrehung des Werkstücks synchronisierte Bewegung eines Werkzeugs. Bei komplexeren Formen weist der zeitliche Verlauf der Führungsgröße für das Werkzeug bei einer spektralen Analyse auch Oberwellen bzw. höhere Harmonische, insbesondere bezogen auf die Drehbewegung des Werkstücks, mit teilweise großen Amplituden auf.

Es wurde erfindungsgemäß festgestellt, dass sich die Vorsteuerung optimieren bzw. der Schleppfehler minimieren lässt, wenn die Frequenzabhängigkeit des Schleppfehlers von einer Frequenz der Führungsgröße bzw. einer Bewegungsfrequenz berücksichtigt wird. Beispielsweise kann ein anteiliger Schleppfehler einer dritten oder fünften Harmonischen bezogen auf die Umdrehung eines Werkzeugs oder Werkstücks, insbesondere zur Bildung einer Freiformfläche einer optischen Linse, besonders kritisch sein. In diesem Fall hat es sich gemäß der vorliegenden Erfindung als besonders vorteilhaft erwiesen, die Vorsteuerung entsprechend, insbesondere adaptiv anzupassen. Insbesondere wird vorgeschlagen, eine zu der Führungsgröße korrespondierende Bewegungsfrequenz zu bestimmen und die Vorsteuerung in Abhängigkeit von der Bewegungsfrequenz anzupassen. In vorteilhafter Weise kann hierdurch der Schleppfehler minimiert und insbesondere für bestimmte, besonders relevante Frequenzen, Frequenzbereiche o.dgl. kompensiert werden.

Eine Bewegungsfrequenz im Sinne der vorliegenden Erfindung korrespondiert zu der Führungsgröße und insbesondere zu einer durch die Führungsgröße definierten Bewegung eines Werkzeugs oder Werkstücks bzw. zur Bewegung des Antriebs. Die Führungsgröße weist in der Regel eine zeitliche und/oder örtliche Abhängigkeit, insbesondere eine Abhängigkeit von der relativen Lage des Werkzeugs zum Werkstück auf, die insbesondere zu einer Lage, insbesondere Drehlage und/oder Quervorschub, bzw. Lageänderung des Werkzeugs korrespondiert. Die (zeitliche) Veränderung der Führungsgröße wird bevorzugt als Verlauf interpretiert, der normalerweise diskretisiert, also insbesondere als Folge von Einzelwerten definiert ist.

Die Bewegungsfrequenz im Sinne der vorliegenden Erfindung ist bevorzugt eine Frequenz, die zu einem solchen Verlauf der Führungsgröße oder einem entsprechenden Verlauf einer Werkzeugbewegung o.dgl. korrespondiert. Die Bewegungsfrequenz kann insbesondere eine mittlere Frequenz oder beispielsweise durch Gewichtung oder auch Amplitude selektierte Frequenz, insbesondere eine Frequenz besonders hoher Amplitude o.dgl. sein. Vorzugsweise wird zur Bestimmung der Bewegungsfrequenz oder eines Filters zur Berücksichtigung dieser die Führungsgröße oder ein hierzu korrespondierender Verlauf analysiert, vorzugsweise durch eine Transformation, insbesondere eine diskrete und/oder Fouriertransformation. Es kann eine Frequenz der Führungsgröße oder des hierzu korrespondierenden Verlaufs als Bewegungsfrequenz bestimmt oder berechnet werden, vorzugsweise eine Frequenz oder Oberwelle mit der höchsten Amplitude oder eine mittlere Frequenz, insbesondere eine unter Berücksichtigung der Amplitude gemittelte Frequenz. Die Bewegungsfrequenz kann von einer Rotationsgeschwindigkeit abhängen, insbesondere von einer Rotationsgeschwindigkeit eines Werkstücks relativ zum Werkzeug.

Erfindungsgemäß ist es besonders bevorzugt, dass ein Vorsteuerfaktor (Gewichtungsfaktor) in Abhängigkeit von der Bewegungsfrequenz bestimmt und dieser Vorsteuerfaktor, vorzugsweise multipliziert mit einem Vorsteuerwert, zur Vorsteuerung verwendet wird. Die Verwendung eines solchen Vorsteuerfaktors stellt eine sehr einfache und effektive Möglichkeit dar, das Verhalten bzw. den Grad der Vorsteuerung zu beeinflussen. Ein Vorsteuerwert im Sinne der vorliegenden Erfindung korrespondiert vorzugsweise zu der Führungsgröße und entspricht insbesondere einer Ableitung dieser. Das Produkt aus Vorsteuerfaktor und Vorsteuerwert, also insbesondere die mit dem Vorsteuerfaktor gewichtete, differenzierte Führungsgröße, kann zur Vorsteuerung einer Stellgröße der Regelung hinzugefügt bzw. zu dieser hinzuaddiert werden. Der Vorsteuerfaktor ist vorzugsweise Teil einer Übertragungsfunktion der Vorsteuerung.

Ein Werkstück kann unterschiedliche Bearbeitungsbereiche aufweisen, wobei zu diesen insbesondere auch unterschiedliche Führungsgrößen und/oder Bewegungsfrequenzen korrespondieren können. Vorschlagsgemäß ist es möglich, dass zu einem oder mehreren Bearbeitungsbereichen eine oder mehrere korrespondierende Bewegungsfrequenzen und/oder Vorsteuerfaktoren, insbesondere für den Antrieb bzw. das Werkzeug oder Werkstück bestimmt werden. Alternativ oder zusätzlich ist es auch möglich, dass zu den unterschiedlichen Bearbeitungsbereichen bzw. den hierzu korrespondierenden Bewegungsfrequenzen, insbesondere jeweils und/oder unterschiedliche, Vorsteuerfaktoren bestimmt werden. Dies ermöglicht in vorteilhafter Weise eine selektive Kompensation des Schleppfehlers unter Berücksichtigung der Eigenschaften unterschiedlicher Bereiche des Werkstücks.

Die vorliegende Erfindung betrifft weiter eine Vorrichtung mit einer Regeleinrichtung zur Regelung eines Antriebs, insbesondere für ein Werkzeug oder Werkstück, besonders bevorzugt zur Bearbeitung einer optischen Linse, mit einem Regler und einer Vorsteuereinrichtung. Vorschlagsgemäß ist die Vorsteuereinrichtung derart ausgebildet, dass die Vorsteuerung in Abhängigkeit von einer zu einer Führungsgröße korrespondierenden Bewegungsfrequenz erfolgt.

Eine Stellgröße der Regelung kann durch Ausgangssignale des Reglers und der Vorsteuereinrichtung gebildet werden. Insbesondere kann die Vorrichtung oder Vorsteuereinrichtung einen Differenzierer und einen Multiplizierer aufweisen, wobei aus einer Differenz der Führungsgröße und einer Regelgröße die Stellgröße generierbar ist, die mit einer durch den Differenzierer differenzierten und durch den Multiplizierer mit einem Vorsteuerfaktor gewichteten Führungsgröße vorsteuerbar ist.

Der Multiplizierer kann im Sinne der vorliegenden Erfindung auch ein Filter sein oder aufweisen, wobei die Multiplikation mit dem Vorsteuerfaktor vorzugsweise durch Dämpfung des Vorsteuerwerts realisiert wird, was insbesondere einer Multiplikation mit einem Vorsteuerfaktor zwischen 0 und 1 entspricht.

Weiter ist bevorzugt, dass die Regeleinrichtung mehrere Regler aufweist, die einen kaskadierten Aufbau bilden, wobei einem oder mehreren der Regler eine Vorsteuerung zugeordnet ist, insbesondere jeweils mit einem Differenzierer und/oder Multiplizierer.

Gemäß einer bevorzugten Ausgestaltung ist die Vorrichtung zur spanenden Bearbeitung einer optischen Linse ausgebildet. Insbesondere ist die Vorrichtung zum Stirndrehen und/oder als eine (Stirn-)Fräse oder Drehbank ausgebildet. Die Vorrichtung weist vorzugsweise mindestens einen Antrieb für ein Werkzeug und eine Werkstückspindel mit einer Aufnahme zur Halterung eines Linsenrohlings auf, wobei der Antrieb bzw. das Werkzeug zur Bearbeitung des Linsenrohlings ausgebildet bzw. angeordnet ist. Bevorzugt bildet mindestens eine Stellgröße, insbesondere des Reglers oder der Regeleinrichtung, ein Steuersignal für den Antrieb.

Die vorliegende Erfindung sieht insbesondere eine von der Bewegungsfrequenz abhängige Dämpfung der Vorsteuerung vor. Beispielsweise ist die Vorsteuerung auf eine hohe oder maximale Bewegungsfrequenz ausgelegt oder kalibriert und wird bei anderen, insbesondere niedrigeren Bewegungsfrequenzen gedämpft. Die Frequenzabhängigkeit der Dämpfung kann insbesondere durch entsprechende Versuche oder Kalibrierungen vorbestimmt sein und beispielsweise durch eine entsprechende Tabelle, Funktion oder dergleichen hinterlegt oder verfügbar sein.

Die bewegungsfrequenzabhängige Variation der Vorsteuerung kann wahlweise vor der eigentlichen Bearbeitung bestimmt und festgelegt werden oder erfolgt vorzugsweise fortlaufend während der tatsächlichen Bearbeitung, wobei bedarfsweise aber auch auf vorbestimmte Werte, wie frequenzabhängige Dämpfungswerte oder Vorsteuerfaktoren, zurückgegriffen werden kann. Insbesondere ist letzteres aufgrund des verhältnismäßig geringen Rechenaufwandes vorschlagsgemäß möglich und sehr einfach während der laufenden Bearbeitung realisierbar.

Im Folgenden wird die Erfindung anhand des besonders bevorzugten Bereichs der Herstellung oder Bearbeitung einer optischen Linse erläutert. Hierzu wird insbesondere Bezug genommen auf eine Werkzeugbewegung zum Stimdrehen. Die Erfindung ist jedoch auch auf sonstige Antriebe für Werkzeuge oder Werkstücke anwendbar. Hierzu zählen insbesondere Verfahren zur spanenden Bearbeitung, beispielsweise Fräsen, Drehen, Bohren, Hobeln o.dgl., insbesondere im Zusammenhang mit Hochgeschwindigkeitszerspanung.

Weitere Aspekte, Merkmale, Vorteile und Eigenschaften der vorliegenden Erfindung ergeben sich aus den Patentansprüchen und aus der nachfolgenden Beschreibung eines bevorzugten Ausführungsbeispiels anhand der Zeichnung. Es zeigt:
- Fig. 1: einen schematischen Aufbau einer vorschlagsgemäßen Vorrichtung zur spanenden Bearbeitung;
- Fig. 2: einen schematischen Aufbau einer Regeleinrichtung der Vorrichtung; und
- Fig. 3: einen detaillierten Aufbau der vorzugsweise , kaskadierten Regeleinrichtung.

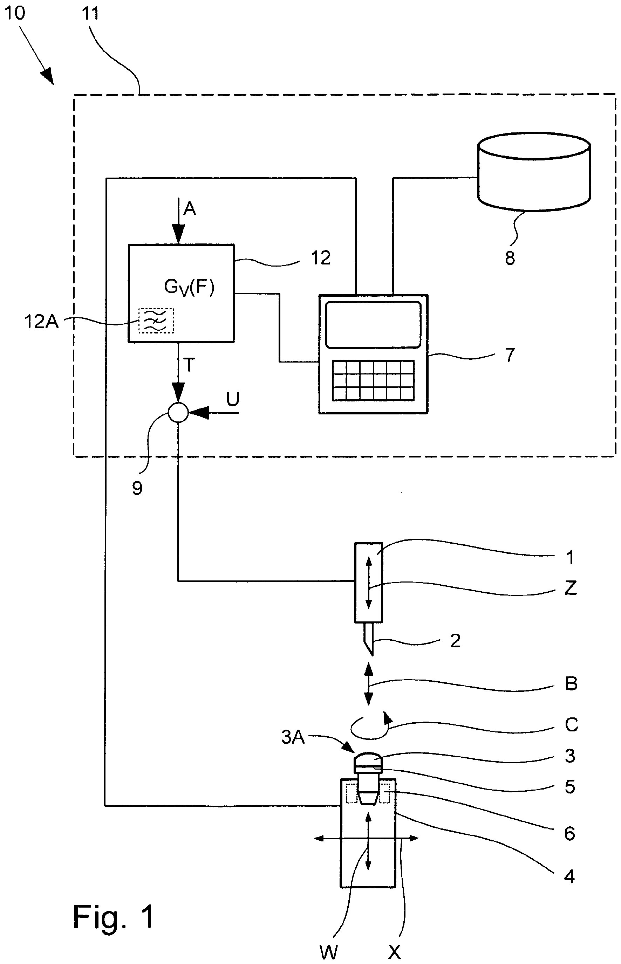

Fig. 1 zeigt eine vorschlagsgemäße Vorrichtung 10 zur spanenden Bearbeitung vorzugsweise durch Drehen, insbesondere durch Stirndrehen. Die Vorrichtung 10 weist vorzugsweise einen Antrieb 1 zum Antreiben bzw. Bewegen insbesondere eines zugeordneten Werkzeugs 2 oder dergleichen auf. Besonders bevorzugt handelt es sich bei dem Werkzeug 2 um ein Bearbeitungswerkzeug, beim Darstellungsbeispiel zur Bearbeitung eines Werkstücks 3.

Das Werkzeug 2 ist beispielsweise als Meißel, insbesondere Drehmeißel oder dergleichen ausgebildet. Alternativ oder zusätzlich kann das Werkzeug 2 aber auch ein sonstiges Werkzeug zum Bearbeiten oder ein Taster, ein Messkopf, ein Sensor o.dgl. sein.

Beim Darstellungsbeispiel ist das Werkzeug 2 mittels des Antriebs 1 vorzugsweise linear hin- und herbewegbar bzw. in einer Z-Achse bewegbar, insbesondere zur Bearbeitung des Werkstücks 3.

Bei dem Antrieb 1 handelt es sich beispielsweise um einen Servo, einen hochdynamischen Motor oder sonstigen Aktuator. Insbesondere handelt es sich bei dem Antrieb 1 um einen komplexen, vorzugsweise elektrisch arbeitenden Achsantrieb, wie einen Tauchspulenantrieb, oder dergleichen, besonders bevorzugt um einen sogenannten Fast-Tool-Antrieb.

Besonders bevorzugt wird das Werkzeug 2 insbesondere in Abhängigkeit von der Drehlage des Werkstücks 3 und/oder in Abhängigkeit des Abstand des Werkzeugs 2 von der Drehachse des Werkstücks 3 in seiner Axiallage bzw. Z-Achse gesteuert bzw. schnell vor- und zurückbewegt.

Der Antrieb 1 gestattet eine vorzugsweise lineare und/oder gesteuerte bzw. geregelte Bewegung des Werkzeugs 2 und bildet daher vorzugsweise eine Z-Achse.

Bei dem Werkstück 3 handelt es sich insbesondere um eine zu bearbeitende Linse bzw. einen Linsenrohling. Das Werkstück 3 bzw. die Linse oder der Linsenrohling besteht vorzugsweise aus Kunststoff, beispielsweise CR-39 bzw. Polycarbonat. Jedoch kann grundsätzlich auch ein sonstiger in geeigneter Weise zu bearbeitender Werkstoff, gegebenenfalls auch Glas bzw. Mineralglas, verwendet werden. Die fertige Linse wird vorzugsweise für eine Brille (nicht dargestellt) eingesetzt bzw. verwendet.

Zum Bearbeiten des Werkstücks 3 ist dieses vorzugsweise rotierbar. Beim Darstellungsbeispiel weist die Vorrichtung 10 hierzu vorzugsweise eine dem Werkstück 3 zugeordnete Werkzeugspindel 4 auf.

Bei der Werkstückspindel 4 handelt es sich insbesondere um eine vorzugsweise direkt angetriebene, präzise gelagerte Welle bzw. einen Direktantrieb oder einen sonstigen Antrieb jeweils mit vorzugsweise integrierter oder zugeordneter Aufnahme 5 für das Werkstück 3, insbesondere für eine Linse bzw. einen Linsenrohling. Grundsätzlich kann eine direkte Aufnahme oder Einspannung des Werkstücks 3 erfolgen. Vorzugsweise wird das Werkstück 3, insbesondere wenn es sich um eine Linse bzw. einen Linsenrohling handelt, jedoch mittelbar über einen Halter, insbesondere ein sogenanntes Blockstück 6, gehalten. Das Blockstück 6 wird dann eingespannt.

Wenn eine Linse als Werkstück 3 bearbeitet wird, wird diese vorzugsweise temporär an einem zugeordneten Halter, wie dem sogenannten Blockstück 6, befestigt. Der mit dem Blockstück 6 verbundene Zustand wird auch als "geblockt" oder "aufgeblockt" bezeichnet. Das Blocken, also temporäre Befestigen, am Blockstück 6 kann beispielsweise durch eine vorzugsweise bei niedriger Temperatur schmelzende Legierung, wie sogenanntes Aloy-Blockmaterial, ein Harz, ein Klebstoff, ein Kunststoff, ein Klebestreifen oder dergleichen erfolgen und ist aus dem Stand der Technik bekannt. Das Blockstück 6 ist dann in die Aufnahme 5 einspannbar, insbesondere so dass das Blockstück 6 und das Werkstück 3 bzw. die Linse eine definierte Drehlage aufweisen.

Mittels der Werkstückspindel 4 ist das gehaltene bzw. eingespannte Werkstück 3 zur Bearbeitung in Drehung bzw. Rotation versetzbar. Die Werkstückspindel 4 bildet also insbesondere einen Drehantrieb für das Werkstück 3. Die Werkstückspindel 4 bildet insbesondere eine gerechnete oder gesteuerte Rundachse C. Insbesondere erfolgt eine CNC-Steuerung der Werkstückspindel 4 bzw. der Rotation des Werkstücks 3.

Das Werkstück 3 ist relativ zum Werkzeug 2 zustellbar bzw. positionierbar. Beim Darstellungsbeispiel sind die Werkzeugspindel 4 und damit das Werkstück 3 vorzugsweise in W-Richtung zu dem Werkzeug 2 zustellbar bzw. positionierbar und/oder in X-Richtung quer zur Zustellrichtung (Quervorschub) bewegbar bzw. verfahrbar, insbesondere mittels eines Kreuzschlittens. Insbesondere werden die gesteuerte W-Achse und X-Achse bzw. Linearachsen gebildet. Grundsätzlich sind auch andere oder zusätzliche Richtungen und/oder Bewegungsachsen möglich. Insbesondere kann die axiale Ausrichtung der Dreh- bzw. Rundachse C der Werkstückspindel 4 auch schräg zur W-Richtung oder zur X-Richtung verlaufen.

Die Richtung der Z-Achse einerseits und die Richtung der W-Achse bzw. die axiale Ausrichtung der Dreh- bzw. Rundachse C andererseits können parallel zueinander oder geneigt zueinander verlaufen und/oder zueinander einstellbar sein. Bei einer relativen Neigung ist diese vorzugsweise derart gering, dass das bevorzugte Stirndrehen zur Bearbeitung des Werkstücks 3 bzw. der Linse in gewünschter bzw. erforderlicher Weise noch erfolgen kann.

Der Begriff "Achse" wird bei der vorliegenden Erfindung besonders bevorzugt im Sinne der Terminologie bei CNC-Steuerungen (numerischen bzw. rechnergestützten Steuerungen) als eine gesteuerte oder geregelte bzw. gerechnete Bewegungsachse, wie eine Linearachse oder Rundachse, verstanden.

Zur Bearbeitung des Werkstücks 3 wird das Werkzeug 2 in Kontakt mit der Oberfläche des Werkstücks 3 gebracht, insbesondere wobei das Werkzeug 2 einen Span des Werkstücks 3 abhebt. Vorzugsweise rotiert das Werkstück 3 bei der Bearbeitung und das Werkzeug 2 wird an dem rotierenden Werkstück 3 entlang gefahren. Dies kann im ersten Ansatz zu einer zur Achse W rotationssymmetrischen Struktur des Werkstücks 3 führen. Werden hiervon abweichende Strukturen beabsichtigt, wird das Werkzeug 2 mit der Drehbewegung bzw. Drehlage des Werkstücks 3 synchronisiert bewegt.

Insbesondere kann mit der Vorrichtung 10 eine Bearbeitung erfolgen bzw. ein Aufbau vorgesehen sein, wie in der EP 0 849 038 A2 oder DE 10 2009 011 194 A2 beschrieben, die hiermit diesbezüglich als ergänzende Offenbarung eingeführt werden.

Beispielsweise kann das Werkstück 3 bzw. dessen Oberfläche durch die Bearbeitung, insbesondere neben einer rotationssymmetrischen Struktur, eine nicht-rotationssymmetrische, beispielsweise zylindrische Komponente erhalten, insbesondere wobei das Werkzeug 2 in einer Auf- und Abbewegung, insbesondere in Richtung der Z-Achse, mit der doppelten Rotationsfrequenz bewegt wird. Bei der Linsenherstellung kann, insbesondere zur Herstellung von sogenannten Freiformflächen, beispielsweise für Gleitsichtgläser bzw. - brillen, eine wesentlich komplexere Bewegung des Werkzeugs 2 notwendig sein. "Freiformflächen" im Sinne der vorliegenden Erfindung zeichnen sich insbesondere dadurch aus, dass sich keine geschlossene mathematische Darstellung oder nur eine näherungsweise mathematische Darstellung, beispielsweise durch bikubische oder höhere Splines o. dgl., möglich ist. Hierbei kann die komplexe Bewegung des Werkzeugs 2 jeweils unterschiedliche spektrale Anteile bzw. Frequenzen aufweisen oder sich durch diese zusammensetzen, insbesondere Oberwellen oder Harmonische bezüglich der Drehgeschwindigkeit bzw. Drehfrequenz des Werkstücks 3.

Die Bewegung des Werkzeugs 2 durch den Antrieb 1 wird vorzugsweise geregelt, da eine einfache Steuerung der Bewegung zu hohe Toleranzen bzw. Fehler zur Folge hätte. Dies gilt insbesondere im Zusammenhang mit hohen Drehgeschwindigkeiten des Werkstücks 3 und/oder einem schnellen Bewegen bzw. Beschleunigen des Werkzeugs 2, wie insbesondere bei der bevorzugten HSC erforderlich.

Bei der HSC wird vorzugsweise bei sehr hohen Schnittgeschwindigkeiten, insbesondere zwischen 1 m/s bis 100 m/s und/oder im Zusammenhang mit Drehen oder Fräsen mit Drehgeschwindigkeiten zwischen 10000 und 100000 Umdrehungen pro Minute gearbeitet und beispielsweise ein verhältnismäßig dünner Span abgehoben, was zu verminderten Reibungsverlusten bei gleichzeitig erhöhter Bearbeitungsgeschwindigkeit führt. Hierbei ist eine schnelle und gleichzeitig präzise Bewegung des Werkzeugs 2 bezüglich des Werkstücks 3 bzw. bezüglich eines Punkts auf der Rotationsachse des Werkstücks 3 erforderlich. Eine entsprechend schnelle Regelung des Werkzeugs 2 bzw. des diesem zugeordneten Antriebs 1 kann jedoch zu Instabilitäten führen. Ein Überschwingen des Werkzeugs 2 im Grenzbereich der Stabilität der Regelung kann dazu führen, dass die Spezifikationen für das Werkstück 3 nicht mehr eingehalten werden können. Eine Regelung mit einer geringen Überschwingweite, insbesondere zumindest im Wesentlichen ohne Überschwingen, ist also bevorzugt, kann jedoch verhältnismäßig langsam sein. Eine langsame Regelung kann einen Schleppfehler verursachen, wobei das Werkzeug 2 die angestrebte Position bzw. den durch eine Führungsgröße A gegebenen veränderlichen Sollwert nicht oder nicht ganz erreicht. Daher erfolgt vorzugsweise zusätzlich zur Regelung auch eine Vorsteuerung.

Die Vorrichtung 10 weist vorzugsweise eine Regeleinrichtung 11 und eine Vorsteuereinrichtung 12 auf, wie in Fig. 1 nur schematisch angedeutet. Die Vorsteuereinrichtung 12 kann einen Teil der Regeleinrichtung 11 bilden oder in diese integriert sein.

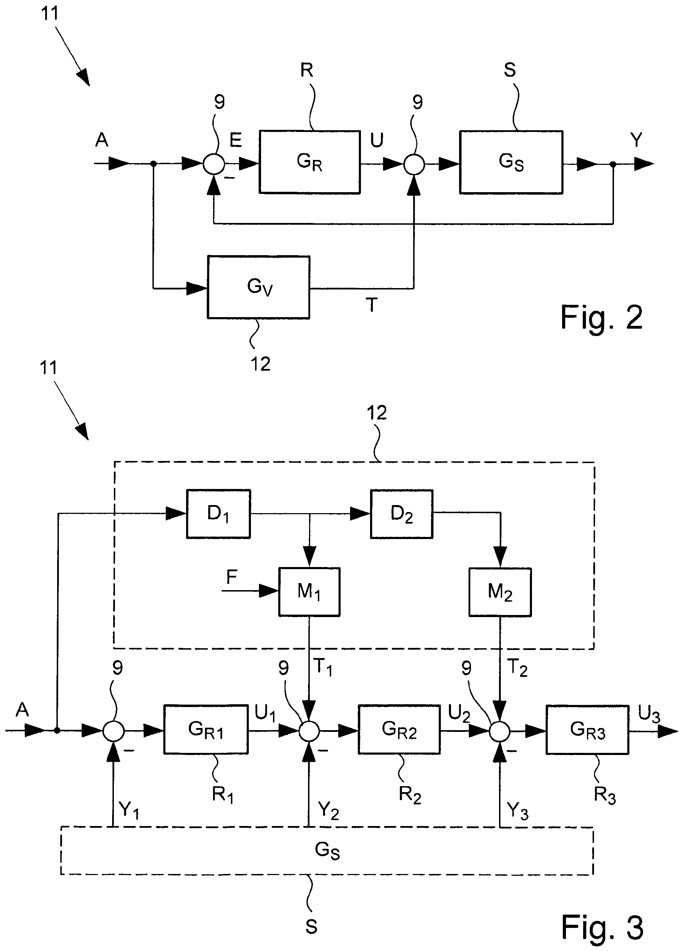

In Fig. 2 zeigt die Regeleinrichtung 11 mit der Vorsteuereinrichtung 12 in einer schematischen Darstellung. Eine Führungsgröße A kann beispielsweise eine Soll-Position für das Werkzeug 2 sein oder aufweisen. Die Führungsgröße A kann zeitlich variieren. Zur Regelung wird von der Führungsgröße A eine Regelgröße Y abgezogen und ein resultierender Fehler E wird mit einem Regler R, der eine Übertragungsfunktion G_{R} aufweist, zu einer Stellgröße U verarbeitet. Die Stellgröße U kann beispielsweise ein Steuersignal, Ankerstrom o.dgl. für den Antrieb 1 des Werkzeugs 2 sein oder bilden. Eine Regelstrecke S, beispielsweise der Antrieb 1 in Kombination mit dem Werkzeug 2, wandelt die Stellgröße U in die Regelgröße Y, insbesondere also ein Steuersignal bzw. Ankerstrom in eine Position des Werkzeugs 2. Die Regelstrecke S kann durch Übertragungsfunktion G_{S} abgebildet oder angenährt werden, welche die Umwandlung der Stellgröße U in die Regelgröße Y beschreibt. Eine besonders bevorzugte Ausgestaltung der Regeleinrichtung 11 wird später anhand von Fig. 3 näher erläutert.

Um den Schleppfehler zu verringern oder zu kompensieren, ist die Vorsteuerung bzw. Vorsteuereinrichtung 12 vorgesehen. Die Vorsteuereinrichtung 12 bildet aus der Führungsgröße A, vorzugsweise mit einer Übertragungsfunktion G_{V}, eine Vorsteuergröße T, die bevorzugt zu der Stellgröße U addiert bzw. hinzugefügt wird, insbesondere an bzw. mit einem Summenpunkt 9, Addierer o.dgl. Auf diese Weise kann mit einer in Bezug auf Instabilitäten unkritischen Steuerung, nämlich der Vorsteuerung, die Stellgröße in die Nähe eines Zielwerts für die Stellgröße gebracht werden und der Regler R muss folglich lediglich die Störgrößen und/oder evtl. die Ungenauigkeiten der Vorsteuerung ausgleichen. Die vorschlagsgemäßen Verbesserungen der Vorsteuerung können daher den Schleppfehler reduzieren und/oder die Anforderungen an die Regelung bzw. die Komplexität der Regelung verringern und/oder eine beschleunigte Bearbeitung des Werkstücks 3 und/oder geringere Toleranzen ermöglichen.

Bisher wurde für die Vorsteuerung eine feste Übertragungsfunktion G_{V} verwendet. Vorschlagsgemäß wird die Übertragungsfunktion G_{V} insbesondere adaptiv bestimmt bzw. angepasst bzw. optimiert oder variiert, wie nachfolgend erläutert.

In Fig. 1 ist die Regeleinrichtung 11 aus Gründen der Übersichtlichkeit lediglich teilweise dargestellt und wird insbesondere durch die Stellgröße U und die Vorsteuereinrichtung 12 repräsentiert. Bezugnehmend auf die zu regelnde Bewegung des Werkzeugs 2 bzw. des Antriebs 1 aus Fig. 1 wurde bereits erwähnt, dass die Bewegung bzw. die Führungsgröße A, insbesondere unter Berücksichtigung der Bearbeitungsgeschwindigkeit, unterschiedliche Frequenzen bzw. spektrale Anteile aufweisen kann. Es wurde festgestellt, dass auch der Schleppfehler in Abhängigkeit von der Bewegungsfrequenz B des Werkzeugs 2 unterschiedliche Anteile bzw. Ausprägungen aufweist. Weiter wurde festgestellt, dass eine Berücksichtigung dieser Frequenzabhängigkeit in der Vorsteuerung bzw. Vorsteuereinrichtung 12 zu einer signifikanten Verringerung des Schleppfehlers führen kann. Insbesondere ist es möglich, den Schleppfehler für bestimmte Frequenzen bevorzugt zu kompensieren. So kann beispielsweise bei der Herstellung von Freiformflächen in der Linsenherstellung die Präzision der fertigen Linse maßgeblich verbessert werden.

Es wird also vorgeschlagen, die Bewegungsfrequenz B insbesondere des Werkzeugs 2 bzw. des Antriebs 1 bzw. der korrespondierenden Führungsgröße A zu berücksichtigen und die Vorsteuerung bzw. deren Übertragungsfunktion in Abhängigkeit von der Bewegungsfrequenz B anzupassen bzw. zu variieren und/oder zu dämpfen.

Die Bewegungsfrequenz B korrespondiert hierbei zu der Führungsgröße A, insbesondere zu einem zeitlichen Verlauf der Führungsgröße A. Die Führungsgröße A kann beispielsweise eine Position, Beschleunigung, Geschwindigkeit oder dgl. sein, wobei die Führungsgröße A über der Zeit veränderlich ist. Dieser zeitlich veränderliche Verlauf der Führungsgröße A kann eine oder mehrere unterschiedliche Frequenzen oder Frequenzanteile aufweisen. Die Bewegung des Antriebs 1, die Werkzeugbewegung sowie weitere Größen der Regelung, insbesondere einfach oder mehrfach abgeleitete Führungsgrößen, korrespondieren zu der Führungsgröße A und können alternativ oder zusätzlich zu dieser verwendet werden, um die Bewegungsfrequenz B zu bestimmen, und/oder in der Vorsteuerung berücksichtigt zu werden. Der zeitliche Verlauf der Führungsgröße A und/oder die Bewegungsfrequenz B kann von der Bearbeitungsgeschwindigkeit bzw. Drehzahl des Werkstücks 2 abhängen.

Die Bewegungsfrequenz B im Sinne der vorliegenden Erfindung ist vorzugsweise eine Frequenz, Oberwelle, Harmonische oder Oberschwingung mit der größten Amplitude, oder eine mittlere Frequenz, insbesondere eine unter Berücksichtigung der jeweiligen Amplituden bzw. spektralen Leistungsdichten gemittelte Frequenz. Diese Bewegungsfrequenz B korrespondiert vorschlagsgemäß zu der Führungsgröße A, kann also aus dieser oder einer korrespondierenden Größe bestimmt oder abgeleitet werden.

Es ist besonders bevorzugt, dass mindestens ein Vorsteuerfaktor F in Abhängigkeit von der Bewegungsfrequenz B bestimmt und dieser Vorsteuerfaktor F, vorzugsweise multipliziert mit einem Vorsteuerwert, zur Vorsteuerung verwendet wird. Der Vorsteuerfaktor F ist also bevorzugt Teil der Übertragungsfunktion G_{V} der Vorsteuereinrichtung 12 bzw. kann diese beeinflussen. Der Vorsteuerwert, bevorzugt eine aus der Führungsgröße A abgeleitete Größe, insbesondere die einfach oder mehrfach abgeleitete Führungsgröße A, beschreibt die Abhängigkeit der Vorsteuergröße T von der Führungsgröße A, wobei der Vorsteuerwert durch den Vorsteuerfaktor F insbesondere gewichtet und der Vorsteuerfaktor F vorschlagsgemäß in Abhängigkeit von der Bewegungsfrequenz B bestimmt bzw. geändert wird.

Das Werkstück 3, insbesondere die zu bearbeitende oder herzustellende Linse, kann einen oder mehrere Bearbeitungsbereiche 3A aufweisen. Ein Bearbeitungsbereich 3A kann beispielsweise ein Bereich mit einer bestimmten Drehgeschwindigkeit oder Schneidgeschwindigkeit, also eine relative Geschwindigkeit des Werkzeugs 3 zur Oberfläche des Werkstücks 2 sein. Alternativ oder zusätzlich kann ein Bearbeitungsbereich 3A ein räumlicher oder Oberflächenbereich oder Abschnitt des Werkstücks 3 und/oder ein Bereich eines Bearbeitungsprofils bzw. eines Profils der Führungsgröße sein, insbesondere mit einem ähnlichen Verlauf der Führungsgröße A, der Bearbeitungsgeschwindigkeit oder Drehzahl. Beispielsweise kann bei der Linsenbearbeitung die durchzuführende Bewegung des Werkzeugs 2 stark davon abhängen, ob der Randbereich oder Bereiche in der Nähe der Rotationsachse bzw. Rundachse C bearbeitet werden, insbesondere wenn die herzustellende optische Linse Freiformflächen o.dgl. aufweist. So kann ein Bearbeitungsbereich 3A ein ringförmiger und/oder um die Rotationsachse bzw. Rundachse C zentrierter Teilbereich des Werkstücks 3 oder eine hierzu korrespondierende Größe sein. Beispielsweise kann der Vorsteuerfaktor, insbesondere kontinuierlich oder stufenweise, in Abhängigkeit vom Abstand des Werkzeugs 2 von der Rotationsachse bzw. Rundachse C gewählt oder geändert werden, beispielsweise korrelierend zu einer Veränderung der Drehfrequenz oder Drehzahl des Werkstücks 3. Bei einer spiralförmigen Bearbeitung der Oberfläche des Werkstücks 3, wie bei einer Linse üblich, kann ein solcher Bearbeitungsbereich 3A einer oder mehreren spiralförmigen Windungen und/oder einem zu der Rundachse C symmetrischen Bereich entsprechen.

Es ist möglich und insbesondere bei stark unterschiedlichen Bearbeitungsbereichen 3A bevorzugt, dass zu dem oder den Bearbeitungsbereichen 3A eine oder mehrere korrespondierende Bewegungsfrequenzen B und/oder Vorsteuerfaktoren F bestimmt werden. Hierdurch wird ermöglicht, die Vorsteuerung adaptiv an die aktuellen mit dem Werkzeug 2 abzufahrenden Profile anzupassen, was den Schleppfehler, insbesondere im Mittel, über das gesamte Werkstück weiter bzw. zusätzlich reduzieren oder kompensieren kann.

Die Bewegungsfrequenz B wird bevorzugt aus der Führungsgröße A oder aus einem hierzu korrespondierenden Verlauf bestimmt. Wie bereits eingangs erwähnt, kann die Führungsgröße A oder der hierzu korrespondierende Verlauf analysiert werden, vorzugsweise durch eine Transformation, insbesondere diskrete und/oder Fourier-Transformation. Insbesondere wird also die Führungsgröße A oder der hierzu korrespondierende Verlauf in Frequenzanteile unterteilt bzw. ein Spektrum hierzu berechnet oder erzeugt. Das Spektrum oder die Frequenzanteile können selektiert, gewichtet und/oder gemittelt zur Bestimmung, insbesondere Berechnung, der Bewegungsfrequenz B verwendet werden.

In einem konkreten Beispiel kann eine Bewegungsfrequenz B und/oder ein zugeordneter Vorsteuerfaktor F, insbesondere iterativ und/oder empirisch, zur Reduktion eines Schleppfehlers bestimmt werden, insbesondere wobei der Schleppfehler bestimmt, minimiert und/oder kompensiert wird. Es ist also möglich, beispielsweise vor der Bearbeitung des Werkstücks 3, vorzugsweise durch Berechnung, Simulation oder Testlauf, zu unterschiedlichen Bewegungsfrequenzen B ggf. enterschiedliche Vorsteuerfaktoren F zu bestimmen, bei denen der Schleppfehler minimiert oder kompensiert wird. Eine solche Zuordnung von Bewegungsfrequenz B zu Vorsteuerfaktor F, insbesondere als Filterfunktion, Profil, Tabelle oder Zuordnungsfunktion, insbesondere einer Polynom- oder Spline-Näherung o.dgl., kann dazu verwendet werden, die Vorsteuereinrichtung 12 im laufenden Betrieb anzupassen. Dies kann beispielsweise durch ein Filter 12A in der Vorsteuereinrichtung 12 erreicht werden, wobei die Filtereigenschaften bzw. Koeffizienten und/oder die Übertragungsfunktion G_{V} der Vorsteuereinrichtung 12 mit der Zuordnung bzw. durch die Spline-Näherung bestimmt, insbesondere berechnet werden.

Beispielsweise kann zur Bestimmung der Zuordnung von Bewegungsfrequenz B zu Vorsteuerfaktor F oder einer hierzu korrespondierenden Filterfunktion ein Computer, Controller oder Rechner 7 oder eine sonstige programmierbare Einrichtung eingesetzt werden. So können vorzugsweise aus Sensorinformationen über die Position des Werkzeugs 2 in einem Testdurchlauf mit unterschiedlichen Bewegungsfrequenzen B geeignete Vorsteuerfaktoren F bestimmt werden. Alternativ oder zusätzlich kann der Vorsteuerfaktor F in Abhängigkeit von der Bewegungsfrequenz B insbesondere in einer Datenbank 8 ablegt bzw. speichert werden, insbesondere als Tabelle, Funktion, Spline o.dgl.

Insbesondere kann im laufenden Betrieb ein zu einer Bewegungsfrequenz B zugeordneter Vorsteuerfaktor F ausgelesen, berechnet, bestimmt und/oder berücksichtigt werden kann. Betriebsmäßig kann ein Vorsteuerfaktor F in Abhängigkeit von der Bewegungsfrequenz B aus der Datenbank 8 ausgelesen werden und die Vorsteuerung mit diesem Vorsteuerfaktor F erfolgen.

Bedarfsweise kann die Bewegungsfrequenz B aus der Datenbank 8 ausgelesen und/oder berechnet und/oder durch das Filter 12A berücksichtigt werden.

Die Vorsteuereinrichtung 12 kann also durch den Vorsteuerfaktor F adaptiv und/oder dynamisch in Abängigkeit von der Bearbeitungsfrequenz B angepasst werden.

Im Folgenden wird auf eine besonders bevorzugte Ausgestaltung der Regeleinrichtung 11 näher eingegangen. Fig. 3 zeigt die Regeleinrichtung 11, bevorzugt zur Verwendung für den Antrieb 1, insbesondere für ein Werkzeug 2 oder Werkstück 3 und/oder zum Herstellen oder Bearbeiten einer optischen Linse, insbesondere wie in Fig. 1 dargestellt. Insbesondere kann die vorschlagsgemäße Vorsteuerung auch für die Regelung eines Antriebs des Werkstücks 3 und/oder sonstige Zwecke, wie der Montage von Bauteilen, eingesetzt werden.

In Fig. 3 ist eine kaskadierte, also mehrstufige Regeleinrichtung 11 dargestellt. Eine kaskadierte Regelung, insbesondere wobei für unterschiedliche Stufen der kaskadierten Regelung eine Vorsteuerung in Abhängigkeit von der Bewegungsfrequenz B erfolgt, ist besonders exakt und daher bevorzugt. Prinzipiell ist es jedoch bereits mit einer Stufe möglich, die Vorteile der vorliegenden Erfindung zu erlangen. Daher wird das Prinzip im Folgenden zuerst an einer ersten Stufe erläutert.

Ein erster Regler R₁ mit einer Übertragungsfunktion G_{R1} verarbeitet die Differenz aus der Führungsgröße A und einer ersten Regelgröße Y₁ zu einer ersten Stellgröße U₁. Weiter wird in der Vorsteuereinrichtung 12 mit einem Differenzierer D₁ die Führungsgröße A differenziert und die differenzierte Führungsgröße A wird durch einen Multiplizierer M₁ mit dem Vorsteuerfaktor F zu einer ersten Vorsteuergröße T₁ multipliziert. Durch diese Multiplikation wird eine modifizierte, insbesondere gewichtete Vorsteuergröße T₁ gebildet. Der Vorsteuerfaktor F ist beim Darstellungsbeispiel größer als 0, vorzugsweise größer als 0,5 bzw. 50 %, insbesondere größer als 0,8 bzw. 80 % und/oder kleiner als 2 bzw. 200 %, vorzugsweise kleiner als 1,5 bzw. 150 %, insbesondere kleiner als 1,2 bzw. 120 %, je nach Bewegungsfrequenz B.

Anstelle der Multiplikation zur Bewegungsfrequenz abhängigen Modifikation der zunächst ummodifizierten Vorsteuergröße kann auch jede sonstige Umwandlung, Filterung o.dgl. erfolgen. Die Multiplikation ist also nicht zwingend.

Weiter ist anzumerken, dass die bevorzugte Differenzierung zur Bestimmung der ummodifizierten Vorsteuergröße aus der Führungsgröße A bevorzugt, aber nicht zwingend ist. Vielmehr kann die unmodifizierte Vorsteuergröße auch auf jede sonstige geeignete Art und Weise bestimmt oder abgeleitet werden.

Außerdem ist es möglich, dass die Bestimmung der ummodifizierten Führungsgröße, die hier in einem ersten Schritt erfolgt, und die anschließende Bewegungsfrequenz abhängige Modifikation der Führungsgröße, die hier in einem zweiten Schritt erfolgt, zusammen in einem gemeinsamen Schritt oder Bestimmungsvorgang erfolgen.

Die erste Stellgröße U₁ wird dann mit der ersten Vorsteuergröße T₁ zusammengeführt, insbesondere in einem Summenpunkt 9.

Vorzugsweise repräsentiert die Führungsgröße A eine Position, insbesondere eine Soll-Position des Werkzeugs 2. Die erste Regelgröße Y₁ repräsentiert in diesem Fall die aktuelle Position des Werkzeugs 2. Die erste Stellgröße U₁ und/oder die erste Vorsteuergröße T₁ korrespondiert vorzugsweise zu einer Geschwindigkeit. Der Multiplizierer M₁ kann auch ein Filter 12A sein oder aufweisen.

Eine zweite oder weitere Stufe der Regeleinrichtung 12 kann entsprechend aufgebaut sein. Im dargestellten Ausführungsbeispiel wird die differenzierte Führungsgröße A durch einen zweiten Differenzierer D₂ ein zweites Mal differenziert und durch einen zweiten Multiplizierer M₂ mit einem zweiten Vorsteuerfaktor F zu einer zweiten Vorsteuergröße T₂ multipliziert. Einem zweiten Regler R₂ wird die Summe aus erster Stellgröße U₁ und erster Vorsteuergröße T₁ unter Abzug einer zweiten Regelgröße Y₂ zur Verfügung gestellt. Die zweite Regelgröße Y₂ kann beispielsweise eine Geschwindigkeit sein oder darstellen. Der zweite Regler R₂ erzeugt eine zweite Stellgröße U₂. Diese kann wiederum mit der zweiten Vorsteuergröße T₂ zusammengeführt werden. Im Darstellungsbeispiel wird hiervon eine dritte Regelgröße Y₃, insbesondere eine Beschleunigung und/oder in einem Summenpunkt 9, subtrahiert. Das Ergebnis wird vorzugsweise mit einem dritten Regler R₃ zu einer dritten Stellgröße U₃ verarbeitet.

Diese dritte Stellgröße U₃ kann beispielsweise ein Steuersignal, Ankerstrom o.dgl. sein oder hierzu korrespondieren. Es kann also insbesondere vorgesehen sein, dass die dritte Stellgröße U₃ für die Kontrolle des Antriebs 1 und/oder der Bewegung des Werkzeugs 2 verwendet wird. Die erste Regelgröße Y₁, die zweite Regelgröße Y₂ und die dritte Regelgröße Y₃, insbesondere also die Position, Geschwindigkeit und Beschleunigung des Antriebs 1 bzw. Werkzeugs 2 kann aus dem physikalischen Verhalten, insbesondere mittels Sensoren o.dgl., und/oder durch die vorzugsweise hierzu korrespondierende Übertragungsfunktion G_{S} der Regelstrecke bestimmt werden.

Gemäß einem auch unabhängig realisierbaren Aspekt der vorliegenden Erfindung ist es, insbesondere alternativ oder zusätzlich zum Multiplizierer M₁, M₂, möglich, die Bewegungsfrequenz B durch ein Filter 12A zu berücksichtigen. Vorzugsweise kann es sich um ein Filter 12A handeln, das einen frequenzabhängigen Vorsteuerfaktor F realisiert, insbesondere eine über der Frequenz veränderliche Dämpfung aufweist. Insbesondere realisiert das Filter 12A also eine Multiplikation mit einem Vorsteuerfaktor, der einer Dämpfung entsprechen kann. Das Filter 12A kann beispielsweise als Zuordnung von Bewegungsfrequenz B zu Vorsteuerfaktor F bestimmt werden, insbesondere also durch Simulation oder Testlauf unter Bestimmung bzw. Minimierung des Schleppfehlers.

Vorschlagsgemäß wird mindestens ein Vorsteuerfaktor F der kaskadierten Regeleinrichtung 11 bzw. Vorsteuereinrichtung 12 aus Fig. 3 in Abhängigkeit von der Bewegungsfrequenz B bestimmt. Besonders bevorzugt ist es jedoch, mehrere und/oder unterschiedliche Vorsteuerfaktoren F für den ersten Multiplizierer M₁, den zweiten Multiplizierer M₂, und/oder für optionale weitere Multiplizierer zu verwenden und/oder vorzugsweise alle Vorsteuerfaktoren F der Vorsteuereinrichtung 11, insbesondere auch unabhängig vom konkreten Beispiel, in Abhängigkeit von der Bewegungsfrequenz B zu bestimmen. Beispielsweise können zu einer Bewegungsfrequenz B, insbesondere in der Datenbank 8, auch mehrere, unterschiedlichen Stufen der Regeleinrichtung 12 bzw. Vorsteuereinrichtung 11 zugeordnete Vorsteuerfaktoren F abgelegt oder abgespeichert sein oder ein entsprechender Vorsteuerfaktor F kann unterschiedliche Werte für unterschiedliche Stufen bzw. Multiplizierer M aufweisen. Die Multiplizierer M bzw. das oder die Filter 12A können zudem dazu ausgebildet sein, eine Zeitverschiebung zu berücksichtigen oder zu realisieren. Weiter kann die Vorsteuereinrichtung 11 oder Teile dieser separat von anderen Komponenten der Regeleinrichtung 12 ausgebildet werden. Insbesondere kann die Vorsteuereinrichtung 11 Teil einer CNC-Steuerung sein.

In der praktischen Anwendung kann es ausreichend sein, die aktuelle Drehgeschwindigkeit des Werkstücks 3 oder eine Harmonische hiervon als Bewegungsfrequenz B zu interpretieren und die Vorsteuerung folglich in Abhängigkeit von der Umdrehungszahl des Werkstücks 3 durchzuführen bzw. einzustellen. Beispielsweise kann bzw. können zu der Drehzahl des Werkstücks 3 bzw. der Spindel 4 ein oder mehrere Vorsteuerfaktoren F bestimmt werden, beispielsweise durch eine Zuordnungstabelle, Matrix, Zuordnungsfunktion, insbesondere eine approximierte Funktion, wie ein Regressions-Polynom oder eine Spline-Näherung.

Im Zusammenhang mit dem Ausführungsbeispiel aus Fig. 1 wurde die Erfindung anhand des Stirndrehens einer optischen Linse im Detail erläutert. Insbesondere wird bevorzugt ein Rohling für eine optische Linse als Werkstück 3 durch Stirndrehen und/oder Hochgeschwindigkeitszerspanung bearbeitet, wobei das vom Antrieb 1 angetriebene Werkzeug 2 die Linse spanend bearbeitet. Alternativ oder zusätzlich ist es jedoch auch möglich, das vorschlagsgemäße Verfahren bzw. die vorschlagsgemäße Vorsteuerung bei beliebigen sonstigen Vorrichtungen, Antrieben oder Regelungen zur spanenden und sogar zur nicht-spanenden Bearbeitung bzw. sonstigen Antrieben oder Regelungen anzuwenden.

Bei dem Ausführungsbeispiel wird das Werkzeug 2 insbesondere translatorisch bewegt. In diesem Zusammenhang ist anzumerken, dass die Führungsgröße A vorzugsweise zu einer Position oder Bewegung des Werkzeugs 2 in Bezug auf das Werkstück 3 oder zu einem Punkt auf einer Rotationsachse des Werkstücks 3 korrespondiert. Es kommt also insbesondere nicht darauf an, ob sich das Werkstück 3 oder das Werkzeug 2 dreht bzw. bewegt wird. Es ist jedoch bevorzugt, dass das Werkzeug 2 und Werkstück 3, insbesondere in Bezug aufeinander, eine Rotationsbewegung aufweisen, wobei es weiter bevorzugt ist, dass der mit dem vorschlagsgemäßen Verfahren geregelte Antrieb 1 eine Bewegung relativ zu einem Punkt auf einer Rotationsachse erzeugen kann. Das Werkstück 3 kann also relativ zum Werkzeug 2 mit einer Rotationsgeschwindigkeit rotiert werden und die Bewegungsfrequenz B von der Rotationsgeschwindigkeit oder Winkelgeschwindigkeit abhängen.

Es ist besonders bevorzugt, dass das Werkzeug 2 translatorisch und/oder in Bezug auf einen Punkt einer Rotationsachse des Werkstücks 3 mit der Bewegungsfrequenz B bewegt wird. Weiter kann die Führungsgröße zu einer Position oder Bewegung des Werkzeugs 2 in Bezug auf das Werkstück 3 oder auf einen Punkt einer Rotationsachse des Werkstücks 3 korrespondieren. Dies schließt insbesondere Fälle ein, wobei ein Werkstück 3 rotiert und ein Werkzeug 2 gegen das rotierende Werkstück 3 gefahren wird (Drehen) und/oder wobei ein rotierendes Werkzeug 2 zumindest tangierend an einem Werkstück 3 entlang geführt wird (Fräsen). Besonders bevorzugt wird hierbei der Antrieb geregelt und vorgesteuert, der dem Werkzeug 2 zugeordnet ist. Dies stellt jedoch keine zwingende Voraussetzung dar.

Weiter ist die vorschlagsgemäße Vorsteuerung auch in unterschiedlichen Regelungen anwendbar, die nicht zwingend mit einem Werkzeug 2 und/oder Werkstück 3 in Zusammenhang stehen müssen. Vorschlagsgemäß ist es also auch möglich, eine zu einer Führungsgröße A korrespondierende Bewegungsfrequenz B zu bestimmen und die Vorsteuerung bzw. Vorsteuereinrichtung 12 in Abhängigkeit von der Bewegungsfrequenz B zu beeinflussen bzw. anzupassen, insbesondere wenn eine schnelle, stabile Regelung mit geringen Schleppfehler benötigt wird oder vorteilhaft ist. Hierzu zählen neben beliebigen Fertigungsverfahren auch sonstige Verfahren, insbesondere bei denen eine über die Frequenz stark veränderliche Führungsgröße auftritt.

**Bezugszeichenliste**

| | | | |
|---|---|---|---|
| 1 | Antrieb | | |
| 2 | Werkzeug | | |
| 3 | Werkstück | | |
| 3A | Bearbeitungsbereich | | |
| 4 | Werkstückspindel | | |
| 5 | Blockstück | | |
| 6 | Aufnahme | | |
| 7 | Rechner | | |
| 8 | Datenbank | | |
| 9 | Summationspunkt | | |
| 10 | Vorrichtung | | |
| 11 | Regeleinrichtung | | |
| 12 | Vorsteuereinrichtung | | |
| 12A | Filter | | |
| A | Führungsgröße | S | Regelstrecke |
| B | Bewegungsfrequenz | T | Vorsteuergröße |
| C | Rundachse | T₁ | erste Vorsteuergröße |
| D₁ | Differenzierer | T₂ | zweite Vorsteuergröße |
| D₂ | Differenzierer | U | Stellgröße |
| E | Fehler | U₁ | erste Stellgröße |
| F | Vorsteuerfaktor | U₂ | zweite Stellgröße |
| G_{R} | Übertragungsfunktion (Regler) | U₃ | dritte Stellgröße |
| G_{R1} | Übertragungsfunktion (erster Regler) | W | Achse |
| G_{R2} | Übertragungsfunktion (zweiter Regler) | X | Achse |
| G_{R3} | Übertragungsfunktion (dritter Regler) | Y | Regelgröße |
| G_{S} | Übertragungsfunktion (Regelstrecke) | Y₁ | erste Regelgröße |
| G_{V} | Übertragungsfunktion (Vorsteuerung) | Y₂ | zweite Regelgröße |
| M₁ | Multiplizierer | Y₃ | dritte Regelgröße |
| M₂ | Multiplizierer | Z | Achse |
| R | Regler | | |
| R₁ | erster Regler | | |
| R₂ | zweiter Regler | | |
| R₃ | dritter Regler | | |

## Patentansprüche

1. Verfahren zur Regelung eines Antriebs (1) für ein Werkzeug (2) oder Werkstück (3), wobei eine Vorsteuerung in Abhängigkeit von einer zu einer Führungsgröße (A) korrespondierenden Bewegungsfrequenz (B) erfolgt,
**dadurch gekennzeichnet,**
**dass** die Führungsgröße (A) analysiert wird und die in Frequenzanteile unterteilte Führungsgröße (A) und/oder ein zu der Führungsgröße (A) berechnetes Spektrum zur Bestimmung der Bewegungsfrequenz (B) verwendet wird, und dass mindestens ein Vorsteuerfaktor (F) in Abhängigkeit von der Bewegungsfrequenz (B) bestimmt wird und dieser Vorsteuerfaktor (F), multipliziert mit einem Vorsteuerwert, zur Vorsteuerung verwendet wird, wobei der Vorsteuerwert von der Führungsgröße (A) abgeleitet wird

2. Verfahren nach Anspruch 1, **dadurch gekennzeichnet, dass** zur Bestimmung der Bewegungsfrequenz (B) oder eines Filters (12A) zur Berücksichtigung der Bewegungsfrequenz (B) die Führungsgröße (A) oder der hierzu korrespondierende Verlauf analysiert wird, vorzugsweise durch eine Transformation, insbesondere eine diskrete und/oder Fouriertransformation.

3. Verfahren gemäß Anspruch 1 oder 2, **dadurch gekennzeichnet, dass** eine Frequenz oder Oberwelle mit der höchsten Amplitude oder eine mittlere Frequenz, insbesondere eine unter Berücksichtigung der Amplitude gemittelte Frequenz, der Führungsgröße (A) oder des hierzu korrespondierenden Verlaufs als Bewegungsfrequenz (B) bestimmt oder berechnet wird.

4. Verfahren gemäß einem der voranstehenden Ansprüche, **dadurch gekennzeichnet, dass** das Werkstück (3) einen oder mehrere Bearbeitungsbereiche (3A) aufweist und dass hierzu eine oder mehrere korrespondierende Bewegungsfrequenzen (B) und/oder Vorsteuerfaktoren (F) bestimmt werden; und/oder dass die Bewegungsfrequenz (B) und ein zugeordneter Vorsteuerfaktor (F), insbesondere iterativ und/oder empirisch, zur Reduktion eines Schleppfehlers bestimmt werden.

5. Verfahren gemäß einem der voranstehenden Ansprüche, **dadurch gekennzeichnet, dass** betriebsmäßig ein Vorsteuerfaktor (F) in Abhängigkeit von der Bewegungsfrequenz (B) oder einer zu der Bewegungsfrequenz (B) korrespondierenden Größe aus einer Datenbank (8) ausgelesen wird und dass die Vorsteuerung mit diesem Vorsteuerfaktor (F) erfolgt.

6. Verfahren gemäß einem der voranstehenden Ansprüche, **dadurch gekennzeichnet, dass** eine kaskadierte Regelung erfolgt, wobei für unterschiedliche Stufen der kaskadierten Regelung eine Vorsteuerung in Abhängigkeit von der Bewegungsfrequenz (B) erfolgt; und/oder
dass das Werkstück (3) relativ zum Werkzeug (2) mit einer Rotationsgeschwindigkeit rotiert wird und dass die Bewegungsfrequenz (B) von der Rotationsgeschwindigkeit abhängt.

7. Verfahren gemäß einem der voranstehenden Ansprüche, **dadurch gekennzeichnet, dass** eine optische Linse als Werkstück (3), insbesondere eine Flachseite der Linse, durch Stirndrehen und/oder Hochgeschwindigkeitszerspanung bearbeitet wird, wobei das vom Antrieb (1) angetriebene Werkzeug (2) die Linse spanend bearbeitet; und/oder
dass zu unterschiedlichen Bewegungsfrequenzen (B) Vorsteuerfaktoren (F) vor der Bearbeitung des Werkstücks bestimmt werden dass die Vorsteuerfaktoren zu unterschiedlichen Bewegungsfrequenzen (B) durch Berechnung, Simulation und/oder Testlauf bestimmt werden; und/oder
dass eine Zuordnung von Bewegungsfrequenz (B) zu Vorsteuerfaktor (V) bestimmt wird, insbesondere als Filterfunktion, Profil, Tabelle und/oder Zuordnungsfunktion.

8. Verfahren gemäß einem der voranstehenden Anspruche, **dadurch gekennzeichnet, dass** im laufenden Betrieb ein zu einer Bewegungsfrequenz (B) oder einer hierzu korrespondierenden Größe zugeordneter Vorsteuerfaktor (F) ausgelesen wird, insbesondere aus einer Datenbank (8), und/oder nachgeführt wird; und/oder
dass die Vorsteuerung adaptiv an die aktuellen mit dem Werkzeug (2) abzufahrenden Profile angepasst wird, vorzugsweise wobei zu unterschiedlichen Bearbeitungsbereichen (3A) eine oder mehrere korrespondierende Bewegungsfrequenzen (B) und/oder Vorsteuerfaktoren (F) bestimmt werden; und/oder dass der Vorsteuerfaktor (F) multipliziert mit einem Vorsteuerwert zur Vorsteuerung verwendet wird; und/oder
dass der Vorsteuerwert zu der Führungsgröße (A) korrespondiert und/oder von der Führungsgröße (A) abgeleitet wird.

9. Vorrichtung (10), wobei die Vorrichtung (10) eine Regeleinrichtung (11) zur Regelung eines Antriebs (1)und eine Vorsteuereinrichtung (12) zur Vorsteuerung des Antriebs (1) in Abhängigkeit von einer zu einer Führungsgröße (A) korrespondierenden Bewegungsfrequenz (B) aufweist,
**dadurch gekennzeichnet,**
**dass** die Vorrichtung dazu ausgebildet ist, die Führungsgröße zu analysieren und die in Frequenzanteile unterteilte Führungsgröße (A) und/oder ein zu der Führungsgröße (A) berechnetes Spektrum zur Bestimmung der Bewegungsfrequenz (B) zu verwenden, und
**dass** mindestens ein Vorsteuerfaktor (F) in Abhängigkeit von der Bewegungsfrequenz (B) bestimmbar und die Vorsteuereinrichtung (12) zur Vorsteuerung mit diesem Vorsteuerfaktor (F) multipliziert mit einem Vorsteuerwert ausgebildet ist, wobei der Vorsteuerwert von der Führungsgröße (A) abgeleitet ist.

10. Vorrichtung gemäß Anspruch 9, **dadurch gekennzeichnet, dass** die Regeleinrichtung (11) oder Vorsteuereinrichtung (12) einen Differenzierer (D₁, D₂) und einen Multiplizierer (M₁, M₂) aufweist; und/oder
dass der Antrieb (1) mit einer durch den Differenzierer (D₁, D₂) differenzierten und durch den Multiplizierer (M₁, M₂) mit dem Vorsteuerfaktor (F) gewichteten Führungsgröße (A) vorsteuerbar ist.

11. Vorrichtung gemäß einem der Ansprüche 9 oder 10, **dadurch gekennzeichnet, dass** aus einer Differenz der Führungsgröße (A) und einer Regelgröße (Y, Y₁, Y₂, Y₃) eine Stellgröße (U, U₁, U_{2,} U₃) generierbar ist; und/oder
dass die Regeleinrichtung (11) mehrere Regler (R, R₁, R₂, R₃) aufweist, die einen kaskadierten Aufbau bilden; und/oder
dass einem oder mehreren der Regler (R, R₁, R₂, R₃) eine Vorsteuerung zugeordnet ist, insbesondere jeweils mit einem Differenzierer (D₁, D₂) und/oder Multiplizierer (M₁, M₂).

12. Vorrichtung gemäß einem der Ansprüche 9 bis 11, **dadurch gekennzeichnet, dass** die Vorrichtung (10) zur spanenden Bearbeitung eines Werkstücks (3), insbesondere einer optischen Linse, vorzugsweise durch Drehen, ausgebildet ist; und/oder
dass die Vorrichtung (10) mindestens einen Antrieb (1) für ein Werkzeug (2) und eine Werkstückspindel (4) mit einer Aufnahme (5) zur Halterung des Werkstücks (3) aufweist und dass der Antrieb (1) von der Regeleinrichtung (11) regelbar ist.

13. Vorrichtung gemäß einem der Ansprüche 9 bis 12, **dadurch gekennzeichnet, dass** das Werkstück (3) relativ zum Werkzeug (2) mit einer Rotationsgeschwindigkeit rotierbar und dass die Bewegungsfrequenz (B) von der Rotationsgeschwindigkeit abhängig bestimmar ist; und/oder
dass die Vorrichtung (10) zum Stirndrehen und/oder zur Hochgeschwindigkeitszerspanung einer optische Linse als Werkstück (3) ausgebildet ist, vorzugsweise wobei die Vorrichtung (10) dazu ausgebildet ist, die Linse mit dem durch den Antrieb (1) angetriebenen Werkzeug (2) spanend zu bearbeiten; und/oder dass zu unterschiedlichen Bewegungsfrequenzen (B) Vorsteuerfaktoren (F) vor der Bearbeitung des Werkstücks (3) bestimmbar sind.

14. Vorrichtung gemäß einem der Ansprüche 9 bis 13, **dadurch gekennzeichnet, dass** die Vorsteuerfaktoren (F) zu unterschiedlichen Bewegungsfrequenzen (B) oder zu zu den Bewegungsfrequenzen (B) korrespondierenden Größen durch Berechnung, Simulation und/oder Testlauf bestimmbar sind; und/oder dass eine Zuordnung von Bewegungsfrequenz (B) oder hierzu korrespondierender Größe zu Vorsteuerfaktor (V) bestimmbar ist, insbesondere als Filterfunktion, Profil, Tabelle und/oder Zuordnungsfunktion; und/oder
dass im laufenden Betrieb ein zu einer Bewegungsfrequenz (B) oder zu einer zu der Bewegungsfrequenz korrespondierenden Größe zugeordneter Vorsteuerfaktor (F) auslesbar ist, insbesondere aus einer Datenbank (8).

15. Vorrichtung gemäß einem der Ansprüche 9 bis 14, **dadurch gekennzeichnet, dass** die Vorsteuerung adaptiv an die aktuellen mit dem Werkzeug (2) abzufahrenden Profile anpassbar ist, vorzugsweise wobei zu unterschiedlichen Bearbeitungbereichen (3A) eine oder mehrere korrespondierende Bewegungsfrequenzen (B) und/oder Vorsteuerfaktoren (F) bestimmbar sind; und/oder
dass die Vorrichtung (10) dazu ausgebildet ist, dass die Bewegungsfrequenz (B) in der Vorsteuerung durch ein Filter (12A) berücksichtigt wird; und/oder
dass die Vorrichtung (10) dazu ausgebildet ist, den Vorsteuerfaktor (F) multipliziert mit einem Vorsteuerwert zur Vorsteuerung zu verwenden.

## Claims

1. Method for control of a drive (1) for a tool (2) or workpiece (3), wherein pilot control takes place depending on a frequency (B) of movement which corresponds to a reference variable (A),
**characterized in**
**that** a reference variable (A) is analyzed and that the reference variable (A) divided in frequency components and/or a spectrum calculated according to the reference variable (A) is used for determining the frequency (B) of movement, and
**that**, depending on the frequency (B) of movement, at least one pilot factor (F) is determined and this pilot factor (F), multiplied by a pilot value, is used for pilot control, wherein the pilot value is derived from the reference variable (A).

2. Method according to Claim 1, **characterized in that** to determine the frequency (B) of movement or a filter (12A) for taking the frequency (B) of movement into account the reference variable (A) or a characteristic corresponding to it is analyzed, preferably by a transform, in particular a discrete and/or Fourier transform.

3. Method according to Claim 1 or 2, **characterized in that** a frequency or harmonic with the highest amplitude or an average frequency, in particular a frequency which has been averaged with consideration of the amplitude, of the reference variable (A) or of the characteristic corresponding to it is determined or computed as a frequency (B) of movement

4. Method according to one of the preceding claims, **characterized in that** the workpiece (3) has one or more machining regions (3A), and that one or more corresponding frequencies (B) of movement and/or pilot factors (F) are determined relating thereto; and/or
that the frequency (B) of movement and an assigned pilot factor (F) are determined, in particular iteratively and/or empirically, for reduction of a contouring error.

5. Method according to one of the preceding claims, **characterized in that** in operation, a pilot factor (F) is read out of the database (8) depending on the frequency (B) of movement or a quantity corresponding to the frequency (B) of movement and that the pilot control takes place with this pilot factor (F).

6. Method according to one of the preceding claims, **characterized in that** cascaded control takes place, wherein for different stages of the cascaded control pilot control takes place depending on the frequency (B) of movement; and/or
that the workpiece (3) is rotated relative to the tool (2) with a rotational velocity and that the frequency (B) of movement depends on the rotational velocity.

7. Method according to one of the preceding claims, **characterized in that** an optical lens as a workpiece (3), in particular one flat side of the lens, is machined by face turning and/or high speed cutting, the tool (2) driven by the drive (1) machining the lens by cutting; and/or
that pilot factors (F) are determined prior to machining of the workpiece at different frequencies (B) of movement that pilot factors are determined by computation, simulation and/or a test run for different frequencies (B) of movement; and/or
that the assignment of the frequency (B) of movement to the pilot factor (V) is determined especially as a filter function, profile, table and/or assignment function.

8. Method according to one of the preceding claims, **characterized in that** in current operation a pilot factor (F) which is assigned to a frequency (B) of movement or a value which corresponds to it is read out, in particular out of a database (8), and/or is tracked; and/or
that the pilot control is matched adaptively to the current profiles which are to be followed with the tool (2), preferably wherein for different machining regions (3A) one or more corresponding frequencies (B) of movement and/or pilot factors (F) are determined; and/or
that the pilot factor (F) multiplied by a pilot value is used for pilot control; and/or that the pilot value corresponds to the reference variable (A) and/or is derived from the reference variable (A).

9. Device (10), wherein the device (10) comprises a control apparatus (11) for control of a drive (1), and a pilot control apparatus (12) for pilot control of the drive (1) depending on a frequency (B) of movement which corresponds to a reference variable (A),
**characterized in**
**that** the device is configured to analyze the reference variable and to use the reference variable (A) divided in frequency components and/or a spectrum calculated according to the the reference variable (A) for determining the frequency (B) of movement, and
**that** at least one pilot factor (F) is determinable depending on the frequency (B) of movement and that the pilot control apparatus (12) is configured for pilot control with this pilot factor (F) multiplied by a pilot value, wherein the pilot value is derived from the reference variable (A).

10. Device according to Claim 9, **characterized in that** the control apparatus (11) or pilot control apparatus (12) has a differentiator (D₁, D₂) and a multiplier (M₁, M₂);
and/or
that the drive (1) is pilotable with a reference variable (A) which is differentiated by the differentiator (D₁, D₂) and which is weighted with the pilot factor (F) by the multiplier (M₁, M₂).

11. Device according to one of Claims 9 or 10, **characterized in that** a manipulated variable (U, U₁, U₂, U₃) is generatable from a difference of the reference variable (A) and a controlled variable (Y, Y₁, Y₂, Y₃); and/or
that the control apparatus (11) has several controllers (R, R₁, R₂, R₃) which form a cascaded structure; and/or
that a pilot control is assigned to one or more of the controllers (R, R₁, R₂, R₃), in particular each with one differentiator (D₁, D₂) and/or multiplier (M₁, M₂).

12. Device according to one of Claims 9 to11, **characterized in that** the device (10) is configured for machining of a workpiece (3) by cutting, in particular an optical lens, preferably by turning; and/or
that the device (10) has at least one drive (1) for a tool (2) and a workpiece spindle (4) with a fixture (5) for holding a workpiece (3) and that the drive (1) is controllable by the control apparatus (11).

13. Device according to one of Claims 9 to 12, **characterized in that** the workpiece (3) is rotatable relative to the tool (2) with a rotational velocity and that the frequency (B) of movement is determinable depending on the rotational velocity; and/or that the device (10) is configured for face turning and/or for high speed cutting of an optical lens as a workpiece (3), preferably wherein the device (10) is made to machine the lens by cutting with the tool (2) driven by the drive (1); and/or
that, prior to machining the workpiece (3), pilot factors (F) are determinable for different frequencies (B) of movement.

14. Device according to one of Claims 9 to 13, **characterized in that** the pilot factors (F) are determinable by computation, simulation and/or a test run for different frequencies (B) of movement or for quantities corresponding to the frequencies (B) of movement; and/or
that the assignment of the frequency (B) of movement or a quantity corresponding to it to the pilot factor (V) is determinable, in particular as a filter function, profile, table and/or assignment function; and/or
that in ongoing operation a pilot factor (F) which is assigned to a frequency (B) of movement or a quantity which corresponds to the frequency (B) of movement is readable, in particular out of a database (8).

15. Device according to one of Claims 9 to 14, **characterized in that** the pilot control is matchable adaptively to the current profiles which are to be followed with the tool (2), preferably wherein for different machining regions (3A) one or more corresponding frequencies (B) of movement and/or pilot factors (F) are determinable;
and/or
that the device (10) is configured for the frequency (B) of movement to be considered in the pilot control by a filter (12A); and/or
that the device (10) is configured for the pilot factor (F) multiplied by a pilot value to be used for pilot control.

## Revendications

1. Procédé pour la régulation d'un dispositif d'entraînement (1) pour un outil (2) ou pour une pièce (3), un pilotage ayant lieu en fonction d'une fréquence de mouvement (B) correspondant à une grandeur de référence (A),
**caractérisé en ce que**
la grandeur de référence (A) est analysée et la grandeur de référence (A) divisée en composantes de fréquences et/ou un spectre calculé en fonction de la grandeur de référence (A) est utilisé pour la détermination de la fréquence de mouvement (B) et
au moins un facteur de pilotage (F) étant déterminé en fonction de la fréquence de mouvement (B) et ce facteur de pilotage (F), multiplié par une valeur de pilotage, est utilisé pour le pilotage, la valeur de pilotage étant dérivée de la grandeur de référence (A).

2. Procédé selon la revendication 1, **caractérisé en ce que**, pour la détermination de la fréquence de mouvement (B) ou d'un filtre (12A), la grandeur de référence (A) ou le tracé correspondant à celle-ci est analysé pour tenir compte de la fréquence de mouvement (B), de préférence à l'aide d'une transformation, plus particulièrement une transformation discrète et/ou une transformation de Fourier.

3. Procédé selon la revendication 1 ou 2, **caractérisé en ce qu'**une fréquence ou une onde harmonique avec l'amplitude maximale ou une fréquence moyenne, plus particulièrement une fréquence moyennée en tenant compte de l'amplitude, de la grandeur de référence (A) ou du tracé correspondant à celle-ci est déterminée ou calculée en tant que fréquence de mouvement (B).

4. Procédé selon l'une des revendications précédentes, **caractérisé en ce que** la pièce (3) comprend une ou plusieurs zones d'usinage (3A) et **en ce qu'**une ou plusieurs fréquences de mouvement (B) et/ou facteurs de pilotage (F) correspondants sont déterminés; et/ou
**en ce que** la fréquence de mouvement (B) et un facteur de pilotage (F) correspondant sont déterminés, plus particulièrement de manière itérative et/ou empirique, pour la réduction d'une erreur de poursuite.

5. Procédé selon l'une des revendications précédentes, **caractérisé en ce que**, dans les conditions normales de fonctionnement, un facteur de pilotage (F) est lu en fonction de la fréquence de mouvement (B) ou d'une grandeur correspondant à la fréquence de mouvement (B) dans une base de données (8) et **en ce que** le pilotage a lieu avec ce facteur de pilotage (F).

6. Procédé selon l'une des revendications précédentes, **caractérisé en ce qu'**une régulation en cascade a lieu, moyennant quoi, pour différents étages de la régulation en cascade, a lieu un pilotage en fonction de la fréquence de mouvement (B); et/ou
**en ce que** la pièce (3) est mise en rotation par rapport à l'outil (2) avec une vitesse de rotation et **en ce que** la fréquence de mouvement (B) dépend de la vitesse de rotation.

7. Procédé selon l'une des revendications précédentes, **caractérisé en ce que** la pièce (3) usinée est une lentille optique, plus particulièrement un côté plat de la lentille, par dressage de face et/ou enlèvement de copeaux à haute vitesse, l'outil (2) entraîné par le dispositif d'entraînement (1) usinant la lentille par enlèvement de copeaux; et/ou
**en ce que**, pour les différentes fréquences de mouvement (B), des facteurs de pilotage (F) sont déterminés avant l'usinage de la pièce, de façon à, ce que les facteurs de pilotage correspondant à différentes fréquences de mouvement (B) soient déterminés par calcul, simulation et/ou marche de test; et/ou
**en ce qu'**une attribution d'une fréquence de mouvement (B) à un facteur de pilotage (V) est déterminée, plus particulièrement en tant que fonction de filtre, profil, tableau et/ou fonction d'attribution.

8. Procédé selon l'une des revendications précédentes, **caractérisé en ce que**, lors du fonctionnement, un facteur de pilotage (F), correspondant à une fréquence de mouvement (B) ou à une grandeur correspondant à celle-ci, est lu, plus particulièrement dans une base de données (8) et/ou est suivie; et/ou
**en ce que** le pilotage est adapté en fonction des profils actuels à parcourir avec l'outil (2), de préférence, pour différentes zones d'usinage (3A), une ou plusieurs fréquences de mouvement (B) et/ou facteurs de pilotage (F) correspondants étant déterminés; et/ou
**en ce que** le facteur de pilotage (F) est multiplié par une valeur de pilotage pour le pilotage; et/ou
**en ce que** la valeur de pilotage correspond à la grandeur de référence (A) et/ou est dérivée de la grandeur de référence (A).

9. Dispositif (10), le dispositif (10) comprenant un dispositif de régulation (11) pour la régulation d'un dispositif d'entraînement (1) et un dispositif de pilotage (12) pour le pilotage du dispositif d'entraînement (1) en fonction d'une fréquence de mouvement (B) correspondant à une grandeur de référence (A),
**caractérisé en ce que**
le dispositif est conçu pour analyser la grandeur de référence et pour utiliser la grandeur de référence (A) divisée en composantes de fréquences et/ou un spectre calculé en fonction de la grandeur de référence (A) pour la détermination de la fréquence de mouvement (B), et
**en ce qu'**au moins un facteur de pilotage (F) peut être déterminé en fonction de la fréquence de mouvement (B) et le dispositif de pilotage (12) est conçu pour le pilotage avec ce facteur de pilotage (F) multiplié par une valeur de pilotage, la valeur de pilotage étant dérivée de la grandeur de référence (A).

10. Dispositif selon la revendication 9, **caractérisé en ce que** le dispositif de régulation (11) ou le dispositif de pilotage (12) comprend un différenciateur (D_{1,} D₂) et un multiplicateur (M₁, M₂); et/ou
**en ce que** le dispositif d'entraînement (1) peut être piloté par une grandeur de référence (A) différenciée par le différenciateur (D₁, D₂) et pondéré avec le facteur de pilotage (F) par le multiplicateur (M₁, M₂).

11. Dispositif selon l'une des revendications 9 ou 10, **caractérisé en ce que**, à partir d'une différence entre la grandeur de référence (A) et une grandeur de régulation (Y, Y₁, Y₂, Y₃), une grandeur de réglage (U, U₁, U₂, U₃) peut être générée;
et/ou
**en ce que** le dispositif de régulation (11) comprend plusieurs régulateurs (R, R₁, R₂, R₃) qui forment une structure en cascade; et/ou
**en ce qu'**à un ou plusieurs des régulateurs (R, R₁, R₂, R₃) correspond un pilotage, plus particulièrement chacun avec un différenciateur (D₁, D₂) et/ou un multiplicateur (M₁, M₂).

12. Dispositif selon l'une des revendications 9 à 11, **caractérisé en ce que** le dispositif (10) est conçu pour l'usinage par enlèvement de copeaux d'une pièce (3), plus particulièrement d'une lentille optique, de préférence par tournage; et/ou
**en ce que** le dispositif (10) comprend au moins un dispositif d'entraînement (1) pour un outil (2) et une broche porte-outil (4) avec un logement (5) pour le support de la pièce (3) et **en ce que** le dispositif d'entraînement (1) peut être régulé par le dispositif de régulation (11).

13. Dispositif selon l'une des revendications 9 à 12, **caractérisé en ce que** la pièce (3) peut être mise en rotation par rapport à l'outil (2) avec une vitesse de rotation et **en ce que** la fréquence de mouvement (B) peut être déterminée en fonction de la vitesse de rotation; et/ou
**en ce que** le dispositif (10) est conçu pour le dressage de faces et/ou l'enlèvement de copeaux à haute vitesse d'une lentille optique en tant que pièce (3), le dispositif (10) étant conçu de préférence pour usiner la lentille par enlèvement de copeaux avec l'outil (2) entraîné par le dispositif d'entraînement (1); et/ou en ce que, pour les différentes fréquences de mouvement (B), des facteurs de pilotage (F) peuvent être déterminés avant l'usinage de la pièce (3).

14. Dispositif selon l'une des revendications 9 à 13, **caractérisé en ce que** les facteurs de pilotage (F) pour les différentes fréquences de mouvement (B) ou les grandeurs correspondant aux fréquences de mouvement (B), peuvent être déterminés par calcul, simulation et/ou marche de test; et/ou
**en ce qu'**une attribution d'une fréquence de mouvement (B) ou d'une grandeur correspondant à celle-ci au facteur de pilotage (V) peut être déterminée, plus particulièrement en tant que fonction de filtrage, profil, tableau et/ou fonction d'attribution; et/ou
**en ce que**, lors du fonctionnement, un facteur de pilotage (F) correspondant à une fréquence de mouvement (B) ou à une grandeur correspondant à la fréquence de mouvement peut être lu, plus particulièrement dans une base de données (8).

15. Dispositif selon l'une des revendications 9 à 14, **caractérisé en ce que** le pilotage peut être adapté en fonction des profils actuels à parcourir avec l'outil (2), de préférence, pour différentes zones d'usinage (3A), une ou plusieurs fréquences de mouvement (B) et/ou facteurs de pilotage (F) correspondants pouvant être déterminés; et/ou
**en ce que** le dispositif (10) est conçu de façon à ce que la fréquence de mouvement (B) soit prise en compte dans le pilotage par un filtre (12A); et/ou
**en ce que** le dispositif (10) est conçu pour utiliser, pour le pilotage, le facteur de pilotage (F) multiplié par une valeur de pilotage.
